# EUROPEAN PATENT APPLICATION

(11) **EP 4 477 976 A1**
(43) Date of publication of application: **18.12.2024**
(21) Application number: 23766021.2
(22) Date of filing: 07.03.2023
(51) Int. Cl.: F25D 17/06

(54) **REFRIGERATOR AND VEHICLE**

(30) Priority: 09.03.2022 CN 202220505946 U; 18.03.2022 CN 202210272959
(71) Applicant: Beijing Chehejia Automobile Technology Co., Ltd., Beijing 101300 (CN)
(72) Inventor: ZHANG, Ziwen, Beijing 101300 (CN); QIU, Peng, Beijing 101300 (CN); LIN, Meisui, Beijing 101300 (CN)
(74) Representative: Loo, Chi Ching
(86) International application number: PCT/CN2023/080170
(87) International publication number: WO 2023/169443

(57) **Abstract**

A refrigerator and a vehicle. The refrigerator includes a refrigerator main-body (1) and an air blowing member (2), a storage room (15) is provided inside the refrigerator main-body (1), an avoiding part (13) in communication with the storage room (15) is provided at the inner wall surface of the refrigerator main-body (1), at least part of the air blowing member (2) is provided inside the avoiding part (13), and the air blowing member (2) is for blowing air toward the storage room (15).

## Description

### CROSS REFERENCE TO RELEVANT APPLICATIONS

This application claims the priorities of the Chinese patent applications No. 2022205059463 and No. 2022102729595 filed in China on March 09th, 2022 and March 18th, 2022, respectively, which are incorporated herein in their entirety by reference.

### TECHNICAL FIELD

The present disclosure relates to the technical field of refrigerating devices, and particularly to a refrigerator and a vehicle.

### BACKGROUND

The refrigerators, as one of the most commonly used home appliance products, serve for the routine work to preserve freshness of food for the users. In the related art, refrigerators are usually of the direct cooling type; in other words, the evaporator in the refrigerator cools the articles inside the refrigerator via thermal conduction and natural air convection. However, the refrigerators of such a structure have a low efficiency of heat exchange, the cooling temperature inside the storage room is nonuniform, and the article cooling speed is low. In addition, the structural design of the cold-air circulating device inside the refrigerators in the related art is unreasonable, and it occupies a large room for storage.

### SUMMARY

The present disclosure aims at solving at least one of the technical problems in the related art to a certain extent.

In view of the above, the embodiments of the present disclosure provide a refrigerator that has a reasonable structural design and a good effect of cooling.

The embodiments of the present disclosure further provide a vehicle.

The refrigerator according to the embodiments of the present disclosure includes a refrigerator main-body and an air blowing member, a storage room is provided inside the refrigerator main-body, an avoiding part in communication with the storage room is provided at an inner wall surface of the refrigerator main-body, at least part of the air blowing member is provided inside the avoiding part, and the air blowing member is for blowing air toward the storage room.

In the refrigerator according to the embodiments of the present disclosure, by providing the air blowing member inside the refrigerator main-body, the cold air of the storage room can be circularly flowed, whereby the cooling temperature inside the storage room is more uniform, and the cooling speed of the articles is increased. In addition, in the refrigerator according to the embodiments of the present disclosure, by providing at least part of the air blowing member inside the avoiding part, the room of the storage room that is occupied by the air blowing member can be reduced, so that the storage room can contain more articles therein, which facilitates the miniaturization design of the refrigerator, to enable the refrigerator to have a compact structure and a reasonable design.

In some embodiments, the refrigerator main-body includes a cabinet, the storage room is provided inside the cabinet, the avoiding part is provided at a top wall of the cabinet, and an air duct is defined between the air blowing member and an inner wall of the avoiding part.

In some embodiments, the refrigerator main-body includes a cabinet and a bracket, the cabinet is provided inside the bracket, the avoiding part is provided at a top wall of the bracket, an air duct is defined between the cabinet and an inner wall surface of the avoiding part, and the air blowing member is provided inside the air duct.

In some embodiments, the inner wall surface of the avoiding part is an upwardly protruding arcuate surface.

In some embodiments, the cabinet includes a cabinet main-body and an installation base, the installation base is provided at an upper end of the cabinet main-body, the installation base is provided with an upwardly protruding supporting part, the air blowing member is connected to the supporting part, and the air duct is defined between the supporting part and the inner wall surface of the avoiding part.

In some embodiments, the air blowing member includes a frame body and wind directing blades, the wind directing blades are provided inside the frame body and are pivotably connected to the frame body, and the frame body is detachably mounted to the supporting part.

In some embodiments, the supporting part is provided with a grid, and an air outlet surface of the air blowing member faces the grid.

In some embodiments, the grid includes first grid holes and second grid holes, the first grid holes are in communication with the air outlet surface and the storage room, and the second grid holes are in communication with the air duct and the storage room.

In some embodiments, the air outlet surface of the air blowing member and a top face of the storage room have a preset included angle therebetween, and the preset included angle is greater than 0° and less than 90°.

In some embodiments, the preset included angle is greater than or equal to 20 degrees and less than or equal to 55 degrees.

In some embodiments, a pick-up opening in communication with the storage room is provided at a side wall of the refrigerator main-body, the air blowing member is located on one side of the storage room that is close to the pick-up opening, and the air blowing member blows air toward one side of the storage room that is away from the pick-up opening.

The vehicle according to the embodiments of the present disclosure includes a vehicle body and a refrigerator, the refrigerator is the refrigerator according to any one of the above embodiments, and the refrigerator is provided inside the vehicle body.

In the refrigerator according to the embodiments of the present disclosure, by providing the air blowing member inside the refrigerator main-body, the cold air of the storage room can be circularly flowed, whereby the cooling temperature inside the storage room is more uniform, and the cooling speed of the articles is increased. In addition, in the refrigerator according to the embodiments of the present disclosure, by providing at least part of the air blowing member inside the avoiding part, the room of the storage room that is occupied by the air blowing member can be reduced, so that the storage room can contain more articles therein, which facilitates the miniaturization design of the refrigerator, to enable the refrigerator to have a compact structure and a reasonable design.

### BRIEF DESCRIPTION OF THE DRAWINGS

FIG. 1 is a schematic diagram of a refrigerator according to an embodiment of the present disclosure.
FIG. 2 is a schematic diagram of a refrigerator according to an embodiment of the present disclosure when the bracket has been removed.
FIG. 3 is a cross-sectional view of a refrigerator according to an embodiment of the present disclosure.
FIG. 4 is a cross-sectional view of a refrigerator according to another embodiment of the present disclosure.
FIG. 5 is a bottom view after an installation base and an air blowing member according to an embodiment of the present disclosure have been assembled.
FIG. 6 is a schematic diagram of assembling between the installation base and the air blowing member of a refrigerator according to an embodiment of the present disclosure.
FIG. 7 is a schematic diagram of a fan of a refrigerator according to an embodiment of the present disclosure.
FIG. 8 is a schematic diagram of an installation base of a refrigerator according to an embodiment of the present disclosure.
FIG. 9 is a schematic diagram of a drawer and a door plate according to an embodiment of the present disclosure.
FIG. 10 is a schematic diagram of assembling between the cabinet and the evaporator of a refrigerator according to an embodiment of the present disclosure.

### Reference numbers:

1: refrigerator main-body; 11: cabinet; 111: cabinet main-body; 112: installation base; 1121: supporting part; 1122: grid; 11221: first grid holes; 11222: second grid holes; 11223: ribs; 12: bracket; 121: first bracket body; 122: second bracket body; 13: avoiding part; 14: air duct; 15: storage room; 16: pick-up opening;
2: air blowing member; 21: fan; 211: frame body; 212: wind directing blades; 22: air inlet surface; 23: air outlet surface;
3: evaporator; 31: cooling pipe;
4: compressor;
5: drawer; and
6: door plate.

### DETAILED DESCRIPTION

The embodiments of the present disclosure will be described in detail below, and the examples of the embodiments are illustrated in the drawings. The embodiments described below with reference to the drawings are exemplary, are intended to interpret the present disclosure, and should not be construed as a limitation on the present disclosure.

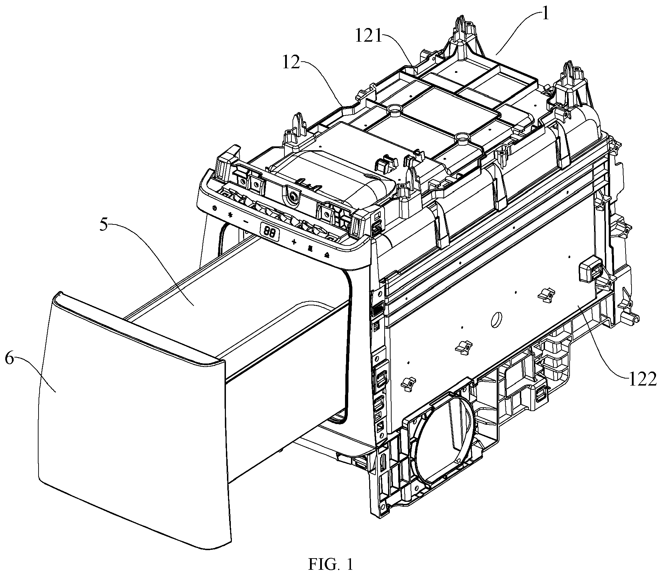

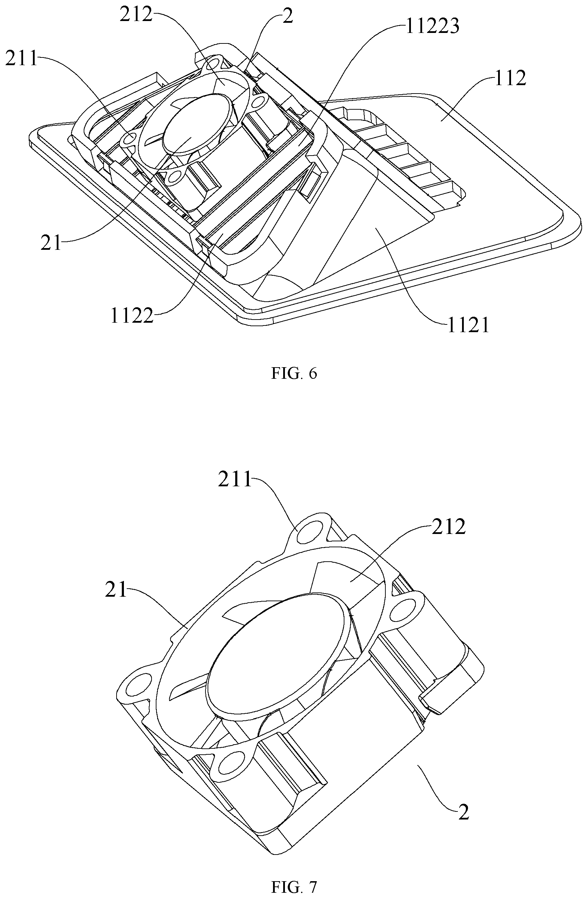

The refrigerator and the vehicle according to the embodiments of the present disclosure will be described below with reference to FIG. 1 to FIG. 10.

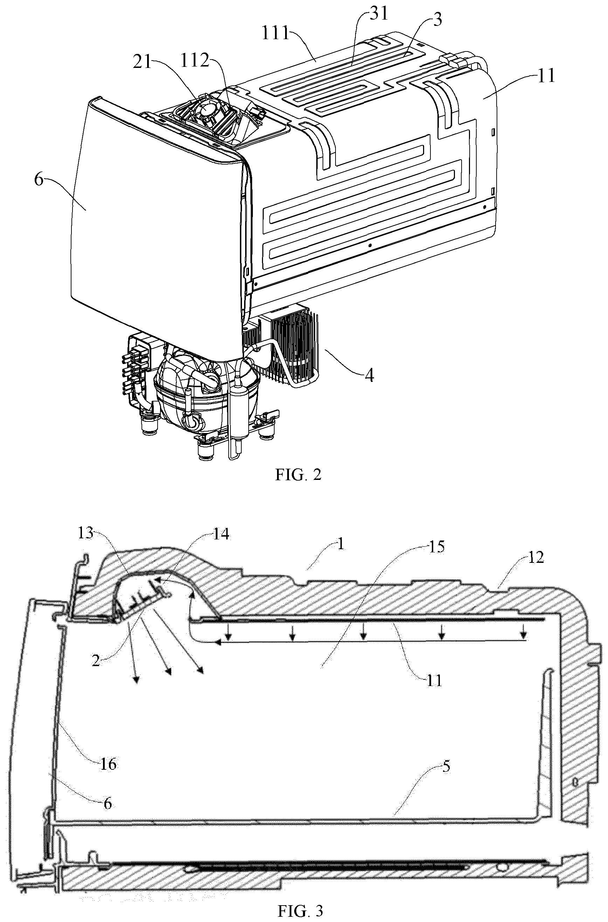

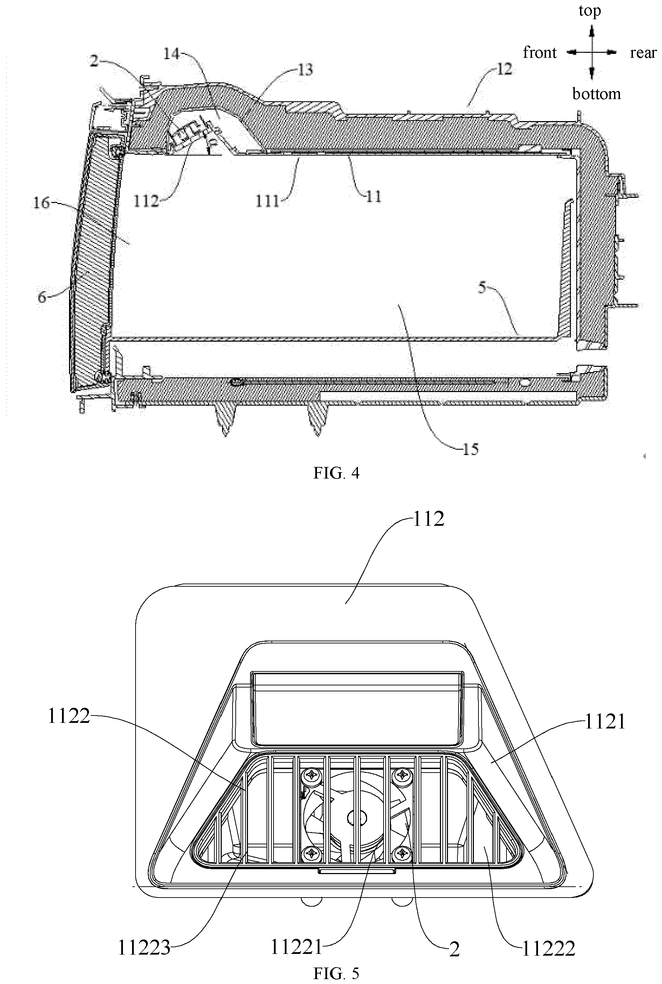

As shown in FIG. 3 and FIG. 4, a refrigerator according to an embodiment of the present disclosure includes a refrigerator main-body 1 and an air blowing member 2, a storage room 15 is provided inside the refrigerator main-body 1, an avoiding part 13 in communication with the storage room 15 is provided at the inner wall surface of the refrigerator main-body 1, at least part of the air blowing member 2 is provided inside the avoiding part 13, and the air blowing member 2 is for blowing air toward the storage room 15. It can be understood that the air blowing member 2 may be located entirely inside the avoiding part 13, or a part of the air blowing member 2 is located inside the avoiding part 13, and the other part is located inside the storage room 15.

In the refrigerator according to the embodiments of the present disclosure, by providing the air blowing member 2 inside the refrigerator main-body 1, the cold air of the storage room 15 can be circularly flowed, whereby the cooling temperature inside the storage room 15 is more uniform, and the cooling speed of the articles is increased. In addition, in the refrigerator according to the embodiments of the present disclosure, by providing at least part of the air blowing member 2 inside the avoiding part 13, the room of the storage room 15 that is occupied by the air blowing member 2 can be reduced, so that the storage room 15 can contain more articles therein, which facilitates the miniaturization design of the refrigerator, to enable the refrigerator to have a compact structure and a reasonable design.

In some embodiments, as shown in FIG. 3 and FIG. 4, the avoiding part 13 is located at the upper part of the storage room 15. For example, the avoiding part 13 may be located at the top wall of the storage room 15. Alternatively, the avoiding part 13 is located at the upper half of the side wall of the storage room 15. In the refrigerator according to the embodiments of the present disclosure, by providing the avoiding part 13 at the upper part of the storage room 15, the flowing of the cold air can be accelerated. It can be understood that, when the air blowing member 2 is blowing air, a vortex can be formed at the middle part and the lower part of the storage room 15, whereby the cold air of the upper part of the storage room 15 can be better sucked into the air blowing member 2 along the top wall and be blown out, and the cold air that is not sucked sinks and is sufficiently circulated along with the vortex, thereby increasing the efficiency of the cooling of the articles.

In some embodiments, as shown in FIG. 3, the refrigerator main-body 1 includes a cabinet 11, the storage room 15 is provided inside the cabinet 11, the avoiding part 13 is provided at the top wall of the cabinet 11, and the air blowing member 2 and the inner wall of the avoiding part 13 define an air duct 14 therebetween. It can be understood that the top wall of the cabinet 11 protrudes upwardly to form the avoiding part 13, and the air blowing member 2 is provided inside the avoiding part 13 and defines the air duct 14 with the inner wall of the avoiding part 13. The cold air of the upper part of the storage room 15 can be better sucked into the air duct 14 along the top wall of the cabinet 11, and subsequently the cold air is blown toward the storage room 15 by the air blowing member 2, which can improve the effect of cooling of the refrigerator.

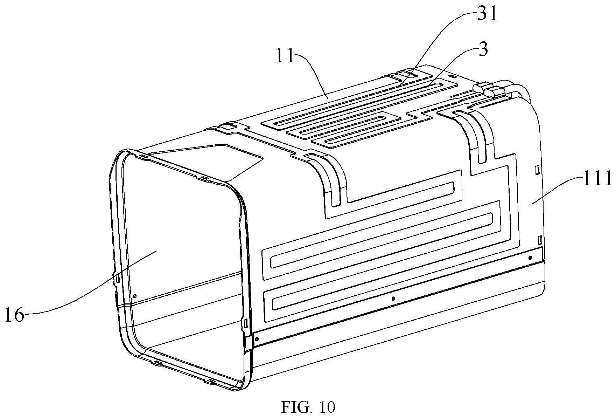

In some particular embodiments, as shown in FIG. 2 and FIG. 10, the refrigerator further includes an evaporator 3 and a compressor 4, the compressor 4 and the evaporator 3 are communicated, the compressor 4 is provided outside the cabinet 11, and the compressor 4 may perform energy exchange with the evaporator 3. The evaporator 3 covers the peripheral wall of the cabinet 11, and the evaporator 3 may transfer cooling capacity toward the interior of the cabinet 11. For example, the evaporator 3 includes a cooling pipe 31, and the cooling pipe 31 coils on the peripheral wall of the cabinet 11, which can improve the effect of refrigeration of the refrigerator.

In some other embodiments, as shown in FIG. 4, the refrigerator main-body 1 includes a cabinet 11 and a bracket 12, the cabinet 11 is provided inside the bracket 12, the avoiding part 13 is provided at the top wall of the bracket 12, the cabinet 11 and the inner wall surface of the avoiding part 13 define an air duct 14 therebetween, and the air blowing member 2 is provided inside the air duct 14. It can be understood that the avoiding part 13 is formed on the bracket 12, and the outer wall surface of the cabinet 11 and the inner wall surface of the avoiding part 13 define the air duct 14 therebetween. The cold air of the upper part of the storage room 15 can be better sucked into the air duct 14 along the top wall of the cabinet 11, and subsequently the cold air is blown toward the storage room 15 by the air blowing member 2, which can improve the effect of cooling of the refrigerator.

In some embodiments, as shown in FIG. 4, the inner wall surface of the avoiding part 13 is an upwardly protruding arcuate surface. That can enable the cold air to, by the directing of the inner wall surface of the avoiding part 13, smoothly enter the air inlet surface 22 of the air blowing member 2, which enables the flowing of the cold air to be smoother, thereby increasing the efficiency of the circulation of the cold air inside the storage room 15.

In some embodiments, as shown in FIG. 4 to FIG. 8, the cabinet 11 includes a cabinet main-body 111 and an installation base 112, the installation base 112 is provided at the upper end of the cabinet main-body 111, the installation base 112 has an upwardly protruding supporting part 1121, the air blowing member 2 is connected to the supporting part 1121, and the supporting part 1121 and the inner wall surface of the avoiding part 13 define the air duct 14 therebetween. For example, the installation base 112 and the cabinet main-body 111 are detachably connected, so that the cabinet main-body 111 and the installation base 112 of the refrigerator according to the embodiments of the present disclosure can be processed and manufactured separately, and subsequently assembled together, which facilitates the processing and manufacturing of the refrigerator, and has a high production efficiency.

In some embodiments, as shown in FIG. 5 to FIG. 7, the air blowing member 2 is a fan 21, the fan 21 includes a frame body 211 and wind directing blades 212, the wind directing blades 212 are provided inside the frame body 211 and are pivotably connected to the frame body 211, and the frame body 211 is detachably mounted to the supporting part 1121. It can be understood that there are a plurality of wind directing blades 212, and the plurality of wind directing blades 212 are arranged at equal intervals around a pivotal shaft. When the fan 21 is rotating, the side of the wind directing blades 212 that is closer to the inner wall surface of the avoiding part 13 is the air inlet surface 22, and the side of the wind directing blades 212 that faces the storage room 15 is the air outlet surface 23. The air inlet surface 22 and the inner wall surface of the avoiding part 13 are separate to form part of the air duct 14, which facilitates the cold air at the top of the storage room 15 to enter the air inlet surface 22 from the air duct 14, thereby improving the smoothness of the circulation of the cold air inside the storage room 15.

In some embodiments, as shown in FIG. 5, FIG. 6 and FIG. 8, the supporting part 1121 is provided with a grid 1122, and an air outlet surface 23 of the air blowing member 2 faces the grid 1122. It can be understood that the grid 1122 includes a plurality of ribs 11223 that are arranged at intervals, and the ribs 11223 may be directly formed on the supporting part 1121, and may also be mounted to the supporting part 1121 by threaded connection or snap fitting. The cold air can flow through the gaps between the adjacent ribs 11223, and the probability with which the articles inside the storage room 15 enter the air duct 14 can be reduced, which prevents the fan 21 from directly contacting the articles inside the storage room 15, thereby improving the safety of the usage of the refrigerator.

In some particular embodiments, as shown in FIG. 5, the grid 1122 includes first grid holes 11221 and second grid holes 11222, the first grid holes 11221 are in communication with the air outlet surface 23 and the storage room 15, and the second grid holes 11222 are in communication with the air duct 14 and the storage room 15. It can be understood that the fan 21 is provided at the middle position of the grid 1122, the region of the grid that is covered by the fan 21 is provided with the first grid holes 11221, and the region of the grid that is not covered by the fan 21 is provided with the second grid holes 11222. The cold air blown when the fan 21 is rotating can enter the storage room 15 via the first grid holes 11221, and the cold air inside the storage room 15 can enter the air duct 14 via the second grid holes 11222, which can facilitate the cold air to be circulated between the air duct 14 and the storage room 15, thereby improving the smoothness of the circulation of the cold air of the refrigerator.

In some embodiments, as shown in FIG. 4, the air outlet surface 23 of the air blowing member 2 and the top face of the storage room 15 have a preset included angle α therebetween, and the preset included angle α is greater than 0° and less than 90°. It can be understood that the air blowing surface of the air blowing member 2 inclines, which can enable the air blowing member 2 to have the component force of blowing air downwardly, and can enable the air blowing member 2 to have the component force of blowing air in the length direction of the storage room 15, thereby further increasing the flow rate of the cold air inside the storage room 15, to improve the effect of refrigeration of the refrigerator.

In some embodiments, the inventor has found by experimental study that, when the preset included angle α is greater than or equal to 20 degrees and less than or equal to 55 degrees, the cold air inside the storage room 15 has a high flow rate, and the refrigerator has a good effect of refrigeration. For example, the preset included angle α may be 20 degrees, 35 degrees, 45 degrees and 55 degrees.

In some embodiments, as shown in FIG. 4, a pick-up opening 16 in communication with the storage room 15 is provided at the side wall of the refrigerator main-body 1, the air blowing member 2 is located on the side of the storage room 15 that is close to the pick-up opening 16, and the air blowing member 2 blows air toward the side of the storage room 15 that is away from the pick-up opening 16. It can be understood that the installation base 112 is provided at the upper end of the pick-up opening 16 of the cabinet main-body 111, so that the air blowing member 2 blows air obliquely and downwardly toward the interior of the storage room 15. Because the air blowing member 2 is adjacent to the pick-up opening 16 and blows air toward the interior of the storage room 15, that can prevent the problem of leakage of the cold air from the refrigerator when the refrigerator is closed. In other words, the heat exchange in the opening and closing of the refrigerator door can be reduced to the smallest extent, whereby the refrigerator has a good effect of cooling and a low power consumption.

In some embodiments, as shown in FIG. 1, FIG. 9 and FIG. 10, the refrigerator further includes a drawer 5. The drawer 5 is connected to the cabinet 11 and is movable between an opening position and a closing position, wherein in the opening position, the drawer 5 protrudes out of the pick-up opening 16, and in the closing position, the drawer 5 is located inside the storage room 15. It can be understood that the drawer 5 is of a hollow structure, and the articles may be placed into the drawer 5, and subsequently sent into the storage room 15 for refrigeration. When it is required to take or store the articles inside the storage room 15, the user may pull the drawer 5 out of the storage room 15, which can facilitate the operation by the user, to have a good effect of usage.

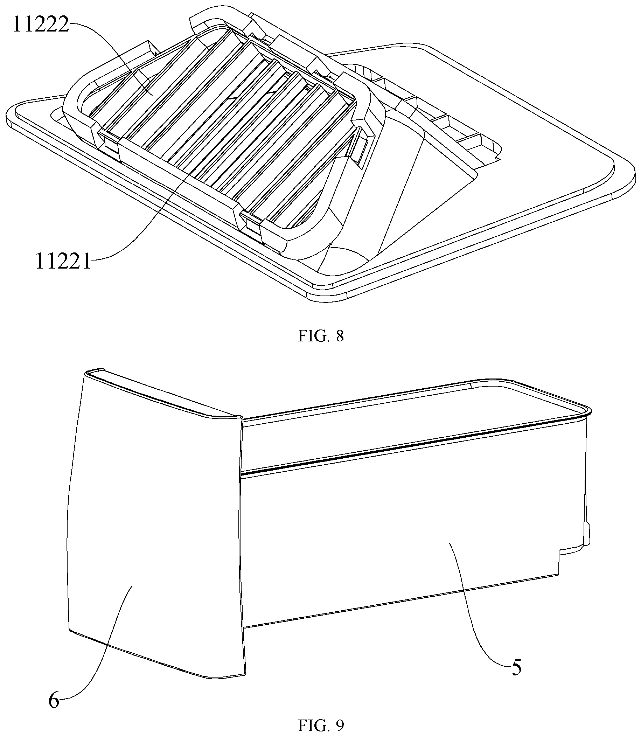

In some particular embodiments, as shown in FIG. 1 and FIG. 9, the refrigerator further includes a door plate 6, the door plate 6 is connected to the drawer 5, and in the closing position, the door plate 6 closes the pick-up opening 16. In some embodiments, the drawer 5 and the door plate 6 are detachably connected. For example, the drawer 5 is connected to the door plate 6 by a thread member or a snap-fitting structure, which facilitates the processing and manufacturing and simplifies the assembling. Alternatively, the drawer 5 and the door plate 6 are integrally formed, which can increase the structural strength and prolong the service life.

In some embodiments, as shown in FIG. 1, the refrigerator further includes the bracket 12, an installation cavity is provided inside the bracket 12, and the cabinet 11 is provided inside the installation cavity. The bracket 12 may be an injection-molded member, which can reduce the weight of the refrigerator, and can ensure the structural strength of the refrigerator. For example, the bracket 12 includes a first bracket body 121 and a second bracket body 122, and the first bracket body 121 is provided at the upper end of the second bracket body 122 to enclose the installation cavity. Both of the first bracket body 121 and the second bracket body 122 are an injection-molded member. The first bracket body 121 and the second bracket body 122 are connected by a thread member. In the refrigerator according to the embodiments of the present disclosure, by configuring the bracket 12 to be the first bracket body 121 and the second bracket body 122, the quantity of the component parts for assembling the bracket 12 can be reduced, and the light-weighting design enables the refrigerator to have a low weight.

A vehicle according to an embodiment of the present disclosure includes a vehicle body and a refrigerator, the refrigerator is the refrigerator according to the embodiments of the present disclosure, and the refrigerator is provided inside the vehicle body.

In the refrigerator according to the embodiments of the present disclosure, by providing the air blowing member 2 inside the refrigerator main-body 1, the cold air of the storage room 15 can be circularly flowed, whereby the cooling temperature inside the storage room 15 is more uniform. When the air blowing member 2 is blowing air, a vortex can be formed at the middle part and the lower part of the storage room 15, whereby the cold air of the upper part of the storage room 15 can be better sucked into the air blowing member 2 along the top wall and be blown out, and the cold air that is not sucked sinks and is sufficiently circulated along with the vortex, thereby increasing the efficiency of the cooling of the articles. In addition, in the refrigerator according to the embodiments of the present disclosure, by providing at least part of the air blowing member 2 inside the avoiding part 13, the room of the storage room 15 that is occupied by the air blowing member 2 can be reduced, so that the storage room 15 can contain more articles therein.

In some embodiments, as shown in FIG. 1, the refrigerator is an onboard refrigerator. It can be understood that the refrigerator according to the embodiments of the present disclosure may be placed inside a vehicle, whereby the refrigerator can have an extensive application range and a good effect of refrigeration.

In the description of the present disclosure, it should be understood that the terms that indicate orientation or position relations, such as "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial" and "circumferential", are based on the orientation or position relations shown in the drawings, and are merely for conveniently describing the present disclosure and simplifying the description, rather than indicating or implying that the device or element must have the specific orientation and be constructed and operated according to the specific orientation. Therefore, they should not be construed as a limitation on the present disclosure.

Moreover, the terms "first" and "second" are merely for the purpose of describing, and should not be construed as indicating or implying the degrees of importance or implicitly indicating the quantity of the specified technical features. Accordingly, the features defined by "first" and "second" may explicitly or implicitly include at least one of the features. In the description of the present disclosure, the meaning of "plurality of" is "at least two", for example, two, three and so on, unless explicitly and particularly defined otherwise.

In the present disclosure, unless explicitly defined or limited otherwise, the terms "mount", "connect", "link" and "fix" should be interpreted broadly. For example, it may be fixed connection, detachable connection, or integral connection; it may be mechanical connection, electrical connection or mutual communication; and it may be direct connection or indirect connection by an intermediate medium, and may be internal communication between two elements or interaction between two elements, unless explicitly defined otherwise. For a person skilled in the art, the particular meanings of the above terms in the present disclosure may be comprehended according to particular situations.

In the present disclosure, unless explicitly defined or limited otherwise, that a first feature is "over" or "under" a second feature may include that the first feature and the second feature directly contact or that the first feature and the second feature indirectly contact via an intermediate medium. Furthermore, that a first feature is "above" a second feature may include that the first feature is directly over or obliquely over the second feature, or merely indicates that the vertical height of the first feature is greater than that of the second feature. That a first feature is "below" a second feature may include that the first feature is directly under or obliquely under the second feature, or merely indicates that the vertical height of the first feature is less than that of the second feature.

In the present disclosure, the terms "an embodiment", "some embodiments", "example", "particular example" or "some examples" and so on mean that particular features, structures, materials or characteristics described with reference to the embodiment or example are included in at least one of the embodiments or examples of the present disclosure. In the description, the illustrative expressions of the above terms do not necessarily relate to the same embodiment or example. Furthermore, the described particular features, structures, materials or characteristics may be combined in one or more embodiments or examples in a suitable form. Moreover, subject to avoiding contradiction, a person skilled in the art may combine different embodiments or examples described in the description and the features of the different embodiments or examples.

Although the above embodiments have already been illustrated and described, it can be understood that the above embodiments are illustrative, and should not be construed as a limitation on the present disclosure, and all of the variations, modifications, substitutions and alterations made to the above embodiments by a person skilled in the art fall within the protection scope of the present disclosure.

## Claims

1. A refrigerator, **characterized in that** the refrigerator comprises a refrigerator main-body and an air blowing member, a storage room is provided inside the refrigerator main-body, an avoiding part in communication with the storage room is provided at an inner wall surface of the refrigerator main-body, at least part of the air blowing member is provided inside the avoiding part, and the air blowing member is for blowing air toward the storage room.

2. The refrigerator according to claim 1, **characterized in that** the refrigerator main-body comprises a cabinet, the storage room is provided inside the cabinet, the avoiding part is provided at a top wall of the cabinet, and an air duct is defined between the air blowing member and an inner wall of the avoiding part.

3. The refrigerator according to claim 1, **characterized in that** the refrigerator main-body comprises a cabinet and a bracket, the cabinet is provided inside the bracket, the avoiding part is provided at a top wall of the bracket, an air duct is defined between the cabinet and an inner wall surface of the avoiding part, and the air blowing member is provided inside the air duct.

4. The refrigerator according to claim 2 or 3, **characterized in that** the inner wall surface of the avoiding part is an upwardly protruding arcuate surface.

5. The refrigerator according to claim 3, **characterized in that** the cabinet comprises a cabinet main-body and an installation base, the installation base is provided at an upper end of the cabinet main-body, the installation base is provided with an upwardly protruding supporting part, the air blowing member is connected to the supporting part, and the air duct is defined between the supporting part and the inner wall surface of the avoiding part.

6. The refrigerator according to claim 5, **characterized in that** the air blowing member comprises a frame body and wind directing blades, the wind directing blades are provided inside the frame body and are pivotably connected to the frame body, and the frame body is detachably mounted to the supporting part.

7. The refrigerator according to claim 5, **characterized in that** the supporting part is provided with a grid, and an air outlet surface of the air blowing member faces the grid.

8. The refrigerator according to claim 7, **characterized in that** the grid comprises first grid holes and second grid holes, the first grid holes are in communication with the air outlet surface and the storage room, and the second grid holes are in communication with the air duct and the storage room.

9. The refrigerator according to any one of claims 1 to 8, **characterized in that** the air outlet surface of the air blowing member and a top face of the storage room have a preset included angle therebetween, and the preset included angle is greater than 0° and less than 90°.

10. The refrigerator according to claim 9, **characterized in that** the preset included angle is greater than or equal to 20 degrees and less than or equal to 55 degrees.

11. The refrigerator according to any one of claims 1 to 10, **characterized in that** a pick-up opening in communication with the storage room is provided at a side wall of the refrigerator main-body, the air blowing member is located on one side of the storage room that is close to the pick-up opening, and the air blowing member blows air toward one side of the storage room that is away from the pick-up opening.

12. A vehicle, **characterized in that** the vehicle comprises a vehicle body and a refrigerator, the refrigerator is the refrigerator according to any one of claims 1 to 11, and the refrigerator is provided inside the vehicle body.
